# EUROPEAN PATENT APPLICATION

(11) **EP 1 936 915 A1**
(43) Date of publication of application: **25.06.2008**
(21) Application number: 07117669.7
(22) Date of filing: 28.08.2001
(51) Int. Cl.: H04L 29/06

(54) **Digital recording of IP based distributed switching platform**

(30) Priority: 28.08.2000 US 228124 P
(62) Divisional of application: 01961110.2
(71) Applicant: NICE Systems Ltd., 43107 Ra'annana (IL)
(72) Inventor: Gritzer, Hagay, 71 908 Maccabim (IL); Freedman, Ilan, 49 726 Petach Tikva (IL); Yosef, Ilan, 43 107 Pardesiah (IL); Shporer, Danny, 43 107 Rechovot (IL)
(74) Representative: Vossius & Partner

(57) **Abstract**

A system and method for recording and/or otherwise monitoring IP multimedia sessions. The present invention features a recording and/or monitoring device, referred to hereinafter as "a recording device" for the purposes of clarity only and without any intention of being limiting. The recording device is a participant in the IP multimedia session, although preferably the recording device only receives data for recording and/or otherwise monitoring the session. Therefore, the IP multimedia session is preferably a multi-user session, such as a "conference call" for example, even if data is being provided for recording from only one of the participants in the session.

## Description

### FIELD OF THE INVENTION

The present invention relates to a system and a method for recording voice and other data passed through IP multimedia sessions, and in particular, for such a system and method in which recording is triggered with the recording device as a participant in the session.

### BACKGROUND OF THE INVENTION

Telecommunication is an important aspect of interactions between individuals, as it enables individuals to communicate without being physically present in the same location, thereby potentially increasing the possibilities for cooperation between such individuals. Simultaneously, an increasing number of telecommunication sessions are being monitored and/or recorded, for example for quality assurance at a "help desk" or other customer support center or service.

Previously, such monitoring or recording was relatively simple in the background art. For example, telephone calls may typically be passed to the individual through a PBX (public exchange) switch or CO (central office), which features a central switching matrix. All telephone calls passing this switch would therefore pass through the central matrix, such that integration of the recording and/or monitoring equipment with the central matrix would enable all such telephone calls to be recorded and/or monitored.

Unfortunately, monitoring and/or recording such telephone calls through the IP multimedia session protocols is not as simple. First, the session is multimedia, such that it may combine two or more different types of data. Second, the session does not pass through a central switching matrix, as IP communication does not feature such a matrix. Thus, such communication is relatively diffuse, even across a WAN (wide area network) or LAN (local area network).

The situation is further complicated by the topology of the IP network, which consists of switch boxes, routers and bridges, and which may prevent any recording and/or monitoring system from accessing such communication sessions that are routed on different network segments. In addition, encrypted sessions add a further element of complexity, as access to such sessions is typically only granted to participants, as only participants have access to the necessary information to decrypt the encrypted session.

### SUMMARY OF THE INVENTION

The background art does not teach or suggest a solution to the problem of collecting information about an interactive session over an IP network. The background art also does not teach or suggest a solution to the problem of monitoring and/or recording IP multimedia sessions. In addition, the background art does not teach or suggest a solution to the problem of monitoring and/or recording IP multimedia sessions that are routed on different network segments.

The present invention overcomes these problems of the background art by providing a system and method for recording and/or otherwise monitoring IP multimedia sessions. The present invention features a recording and/or monitoring device, referred to hereinafter as "a recording device" for the purposes of clarity only and without any intention of being limiting. The recording device is a participant in the IP multimedia session, although preferably the recording device only receives data for recording and/or otherwise monitoring the session. Therefore, the IP multimedia session is preferably a multi-user session, such as a "conference call" for example, even if data is being provided for recording from only one of the participants in the session. This implementation of the present invention, as described in greater detail below, overcomes such drawbacks of the background art as the inability to otherwise decrypt encrypted sessions, and recording across network segments.

Hereinafter, the term "separate network portion" includes any separate portion or network across which recording is performed, such as a different network segment and/or network for example.

According to a preferred embodiment of the present invention, the recording device is present on a network with a conference control unit, such as a MCU (multi conference unit) for example. Hereinafter, the term "conference" is used to refer to any multi-pirticipant session, even if only two participants are present, one of which is the device of the present invention. The conference control unit either receives a request to initiate the conference call (multimedia session) from the recording device of the present invention and/or from one of the participating IP communication devices, and/or from some other component on the network. Examples of such communication devices include, but are not limited to, IP telephony devices, "smart" IP telephones and computational devices which include an IP telephony component.

According to another optional but preferred implementation of the present invention, the recording device is the NiceLog^{™} product of Nice Systems Ltd of Ra'anana, Israel.

Hereinafter, the term "computational device" refers to any type of computer hardware system and/or to any type of software operating system, or cellular telephones or any type of hand-held device such as a PDA (personal data assistant), as well as to any type of device having a data processor and/or any type of microprocessor, or any type of device which is capable of performing any function of a computer.

For the present invention, a software application or program could be written in substantially any suitable programming language, which could easily be selected by one of ordinary skill in the art, The programming language chosen should be compatible with the computational device according to which the software application is executed. Examples of suitable programming languages include, but are not limited to, C, C++ and Java.

In the following preferred aspects of the present invention will be disclosed.
1. A method for recording a data session through a network by a recording device, comprising,
   initiating the data session by a first communication device;
   implementing the data session as a conference call in response to initiating the data session;
   entering the recording device to said conference call as a participant; and
   recording the data session through said conference call.
2. The method of aspect 1,wherein only said first communication device and said recording device participate in said conference call.
3. The method of aspect 1,wherein the data session is an IP telephony session.
4. The method of aspect 1,wherein the data session is an IP multimedia session.
5. The method of aspects 3 or 4, wherein said first communication device contacts the recording device.
6. The method of aspects 3 or 4,wherein initiating the data session is detected by a recording agent, and said recording agent contacts the recording device.
7. The method of aspect 6,wherein a conference controller implements said conference call.
8. The method of aspect 7,wherein said conference controller is a MCU.
9. The method of any of aspects 4-8,wherein said first communication device is a gateway for receiving communication through a PSTN (public switched telephony network).
10. The method of any of aspects 1-9,wherein the recording device joins the data session through a hunt group.
11. A system for recording an IP communication session through an IP network, comprising:
   (a) a first communication device for initiating the IP communication session;
   (b) a conference controller for implementing a conference call with said first communication device for the IP communication session; and
   (c) a recording device for participating in said conference call to record the IP communication session.
12. The system of aspect I 1,further comprising a second communication device for participating in the IP communication session through said conference call, wherein said first communication device is located on a separate network portion from said second communication device.
13. The system of aspect 12,wherein said separate network portion is a different network segment.
14. The system of aspect 12,wherein said separate network portion is a different network.
15. The system of aspect 11,wherein said recording device is the NiceLog^{™} product.
16. The system of aspect 11,further comprising:
   (d) a gatekeeper for receiving said request from said first communication device to initiate the IP communication session and for sending a request to said conference controller to initiate said conference call.
17. The system of aspect 16,further comprising:
   (e) a recording agent for controlling said recording device.
18. The system of aspect 17,wherein said recording device and said recording agent are implemented in a single device.
19. The system of aspects 17 or 18,further comprising:
   (f) a recording agent control module for initiating participation of said recording device in said conference call.
20. The system of any of aspects 16-19,further comprising a telephone device connected to said gatekeeper through a PSTN (public switched telephony network) for participating in the IP communication session.
21. The system of any of aspects I 1-20,further comprising a scheduler for determining whether the IP communication session is recorded, said scheduler controlling said recording device.
22. The system of any of aspects 11-21 , wherein said conference controller is a MCU.

### BRIEF DESCRIPTION OF THE DRAWINGS

The invention is herein described, by way of example only, with reference to the accompanying drawings, wherein:
FIG. 1 is a schematic block diagram of an exemplary system according to the present invention;
FIG. 2 is a flowchart of an exemplary method according to the present invention for recording and/or otherwise monitoring IP multimedia sessions;
FIG. 3 is a flow diagram of an optional flow of operations according to the present invention;
FIG. 4 is a schematic block diagram of a second exemplary system according to the present invention; and
FIG. 5 shows a flowchart of another exemplary method according to the present invention, with regard to the implementation of the present invention with a "hunt group".

### DESCRIPTION OF THE PREFERRED EMBODIMENTS

The present invention is of a system and method for recording and/or otherwise monitoring IP multimedia sessions. The present invention features a recording and/or monitoring device, referred to hereinafter as "a recording device" for the purposes of clarity only and without any intention of being limiting. The recording device is a participant in the IP multimedia session, although preferably the recording device only receives data for recording and/or otherwise monitoring the session. Therefore, the IP multimedia session is preferably a multi-user session, such as a "conference call" for example, even if data is being provided for recording from only one of the participants in the session.

Optionally, only a portion of all such multimedia sessions are recorded, although alternatively, all such sessions are recorded. The recording device may optionally receive a command for determining when a session is to be recorded. Alternatively, the recording device may receive data for all such sessions, but may preferably only record certain sessions. More preferably, a scheduler determines whether the session should be recorded, which may optionally be located with the recording device but alternatively is separated on the network.

According to a preferred embodiment of the present invention, the recording device is present on a network with a conference control unit, such as a MCU (multi conference unit) for example. Hereinafter, the term "conference" is used to refer to any multi-participant session, even if only two participants are present, one of which is the device of the present invention. The conference control unit either receives a request to initiate the conference call (multimedia session) from the recording device of the present invention and/or from one af the participating IP communication devices, and/or from some other component on the network. Examples of such communication devices include, but are not limited to, IP telephony devices, "smart" IP telephones and computational devices which include an IP telephony component.

According to another optional but preferred implementation of the present invention, the recording device is the NiceLog^{™} product of Nice Systems Ltd of Ra'anana, Israel.

According to other optional but preferred embodiments of the present invention, the IP multimedia session may also include one or more non-IP telephony devices, such as a telephone device communicating through the PSTN (public switched telephony network). For this embodiment, the system of the present invention preferably features a gateway for receiving such communication and for enabling the data to be passed to other components of the present invention, including but not limited to the recording device.

According to another optional but preferred implementation of the present invention, the system and method of the present invention are enabled for "hunt groups", which use a plurality of virtual telephone numbers rather than fixed telephone lines that are reserved for particular telephone numbers. Hunt groups are well known in the art; one example of a suitable reference is found in "Newton's Telecom Dictionary", 16th Expanded & Updated Edition, by Harry Newton (published in 2000, by Telecom Books; page 414), which is incorporated by reference as if fully set forth herein. Hereinafter, the term "hunt group" refers to any type of virtual or non-fixed telephone extension systems, in which a central control unit of some type, such as the gatekeeper of the present invention, determines the physical extension which is used.

The present invention may also optionally be implemented with a number of well known protocols in the background art for multimedia IP sessions, including but not limited to H.323, RTP (real time protocol), RTCP (real time control protocol), H.225 and H.245; as well as CODECs for encoding/decoding the multimedia data for such sessions, including but not limited to, G.711, G.723, G.722, G.728, H.261 and H.263; all of which are hereby incorporated by reference as if fully set forth herein. In addition, references may be found at http://www.normos.org/ietf/rfc/rfc1889.txt as of August 17, 2001, which are also hereby incorporated by reference as if fully set forth herein, including all links and other data/Wab pages found at the Web site. Further information may also be found in US Patent No. 6,122,665, issued September 19, 2000, which is also incorporated by reference as iffully set forth herein.

The principles and operation af the method according to the present invention may be better understood with reference to the drawings and the accompanying description. -It should be noted that the present invention is described with regard to IP telephony for the purposes of clarity only and without any intention of being limiting.

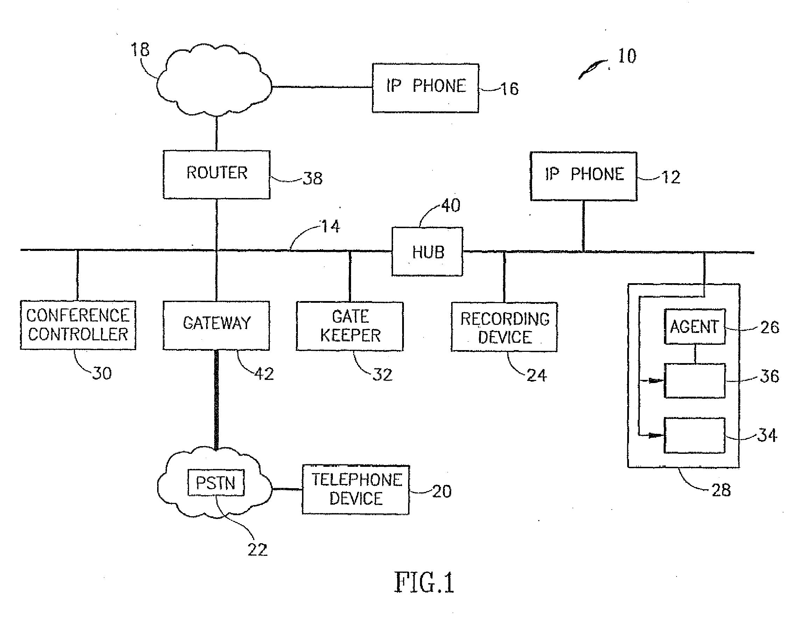

Referring now to the drawings, Figure 1 shows an illustrative system 10 for recording and/or otherwise monitoring an IP communication session, which may optionally be a multimedia session. The session may optionally be initiated at any one of an IP telephone **12** on a LAN (local area network) **14;** an IP telephone **16** on a WAN (wide area network) **18;** and a telephony device 20 communicating through a PSTN (public switched telephony network) 22. Examples of suitable IP telephones include but are not limited to, VIP 30 or SP+12 (Cisco Inc., San Jose, California, USA). Preferably, the actual handling of the session is slightly different for each of these different initiating devices, as described in greater detail below.

As shown, LAN **14** features a recording device **24.** According to another optional but preferred implementation of the present invention, recording device **24** is the NiceLog^{™} product of Nice Systems Ltd of Ra'anana, Israel. This product features a monitor for monitoring activity through voice telephony on an IP network. Although the activity is monitored through voice telephony protocols, other types of data may also optionally be monitored, such as video and audio data transmissions. The monitor component of the NiceLog^{™} product includes a recording function to record these voice and other types of data transmissions. For example, the recording function may be manually activated to start recording. Further details may be found in the User's Manual of the NiceLog^{™} product.

Recording device **24** is preferably in communication with a recording agent **26** for controlling the process of recording, although optionally both recording device **24** and recording agent **26** may be present in a single device, although separate devices are preferred. Alternatively, recording device **24** may optionally perform all of these functions. Recording agent 26 is preferably operated as a software module by a computational device **28.** According to the present invention, upon initiation of the IP multimedia session, recording agent **26** determines that the session has been initiated and directs recording device **24** to record the session. Optionally, only certain sessions are recorded. In order to support recording, the multimedia session is constructed as a conference call, and recording device **24** then becomes a participant in that conference call.

Figure 1 shows one exemplary implementation for supporting these functions. As shown, LAN **14** also optionally and preferably is connected to a conference controller 30, such as an MCU for example. Conference controller **30** establishes the conference call. Preferably, LAN **1**4 connects to a gatekeeper **32** according to the H.323 protocol, which translates telephone numbers to IP addresses, and therefore enables the initiating device to locate the other communication device (if present on LAN **14**). A non-limiting example of gatekeeper **32** is the MCS 7820 product (Cisco Inc., San Jose, California, USA). Gatekeeper **32** may optionally be assisted in performing IP address resolution by a DHCP server (not shown), which is connected to LAN **14.** DHCP server assigns IP addresses to IP telephone **12** and to other IP telephones and devices; the assigned addresses are then passed to gatekeeper **32** for performing IP address resolution.

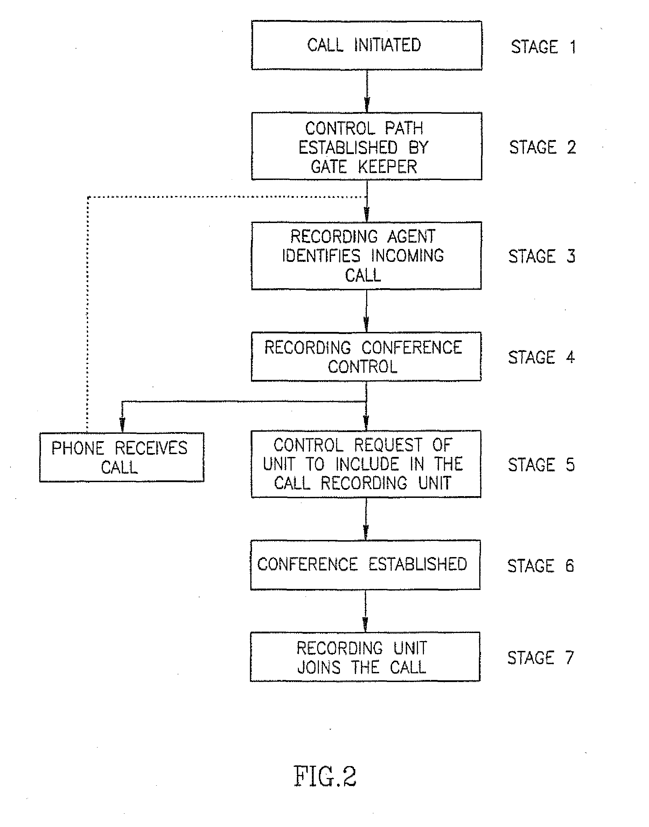

For the first example of initiating device previously given, IP telephone **12** on LAN **14** initiates the session, as explained also with regard to the flowchart of Figure 2, showing an exemplary method according to the present invention for recording and/or otherwise monitoring IP multimedia sessions, For example, IP telephone **12** may contact gatekeeper **32** to initiate the session with an IP telephone **34** on computational device **28** in stage 1. Both participants are therefore connected through LAN **14.**

In stage 2, the control path is established by gatekeeper **32,** for example according to the H.323 protocol, in order for the IP session to be initiated. In stage 3, if recording device **24** is not present and/or operational, preferably the normal IP communication session is enabled with IP telephone **34.** Alternatively, if recording device **24** is present, then recording agent **26** preferably identifies the incoming request to initiate the session.

In stage 4, a recording agent control module **36,** shown with regard to Figure 1, preferably controls the conference call recording. Optionally and more preferably, recording agent control module **36** sends a request to initiate the conference call to gatekeeper **32.** This request preferably includes a request to include recording device **24** in the conference call.

In stage 5, gatekeeper **32** sends a request to conference controller **30** to initiate the IP multimedia session, with recording device **24** as a participant thereof. In stage 6, conference controller **30** initiates the conference call between IP telephone **12** and IP telephone **34.** In stage 7, recording device **24** is preferably added to the conference call.

A similar operation is performed if the session is to be established with IP telephone **16** on WAN **18.** As shown in Figure 1, WAN **18** is optionally connected to LAN **14** through a router **38** (LAN **14** may optionally feature a hub **40).** IP telephone **12** may again initiate the session by contacting gatekeeper **32;** the remaining stages are performed substantially as previously described. Alternatively, IP telephone **16** may initiate the session. In order for IP telephone **16** to initiate the session and the recording, preferably IP telephone **16** features recording agent **26** and recording agent control module **36** as part of a single device. It should be noted that only one of IP telephone **12** and IP telephone **16** requires recording agent **26** and recording agent control module **36,** operated directly by the IP telephone itself (in the case of a "smart telephone"), or alternatively operated by a computational device which also operates the IP telephone, in order for the session to be recorded.

The operation is preferably adjusted somewhat if a telephony device **20** communicating through a PSTN **22** is contacted by IP telephone **12** to initiate the multimedia call and/or if telephony device **20** initiates the call. In both cases, communication to and from telephony device **20** passes through a gateway **42,** for example in order to translate regular PSTN **22** communication to IP-based communication, such as H.323 protocol-based communication for example. Gateway **42** then preferably contacts gatekeeper **32** in order for telephony device 20 to be recognized as a participant in the session. The remaining functions are similar to those shown in Figure 2. Gateway **42** may optionally be implemented as a Cisco Internet Router 3620, for example (Cisco Inc., San Jose, California, USA).

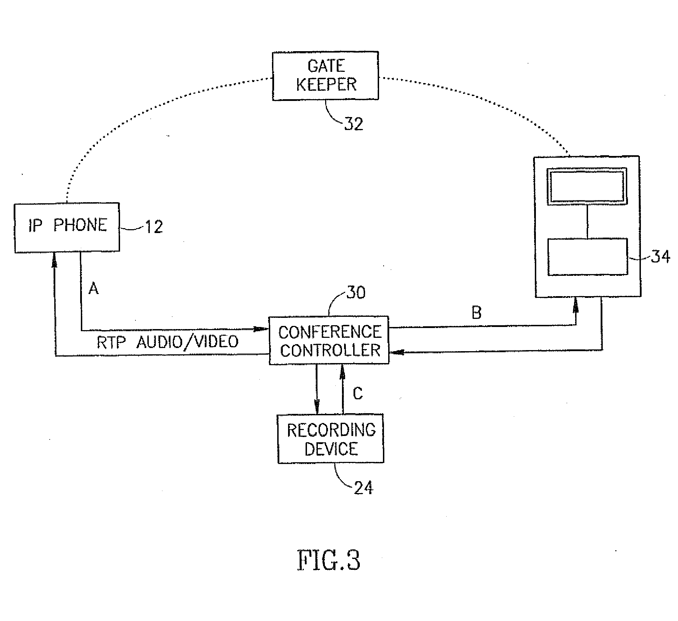

Figure 3 shows a flow diagram of an optional flow of operations according to the present invention. As shown, IP telephone **12** initiates the session, through gatekeeper **32,** to IP telephone **34.** The session is implemented as a conference call. Conference controller 30 enables recording device **24** to participate in the conference call, as well as preferably enabling the conference call itself It should be noted that typically that only information passing through arrows "A" and "B", from each of IP telephone **12** and IP telephone **34** respectively, is recorded. Also, optionally and preferably, recording device **24** only receives communication through arrow "C".

For this implementation, recording device **24** preferably has at least one, and more preferably a plurality of, reserved telephone numbers which correspond to actual telephone lines. Video and/or audio data may optionally be captured according to the RTP (real time protocol) protocol.

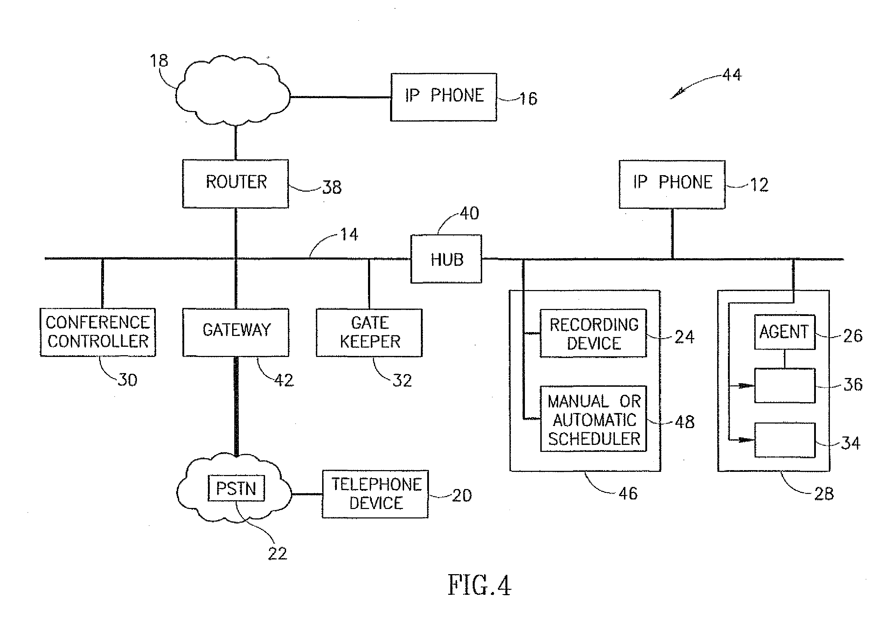

Figure 4 shows another exemplary system **44** according to the present invention for selective recording of sessions. Similar components to Figure 1 retain the same numbering. Now, recording device **24** is preferably contained within a selective recorder **46,** which also features a scheduler **48.** Scheduler **48** may optionally be manual or automatic. For the latter implementation, scheduler **48** may optionally analyze information about the IP multimedia session, such as the identity of the initiating and/or receiving device, in order to determine whether the session should be recorded. For the manual implementation, the user at the receiving and/or initiating IP telephony device may optionally determine whether the session should be recorded.

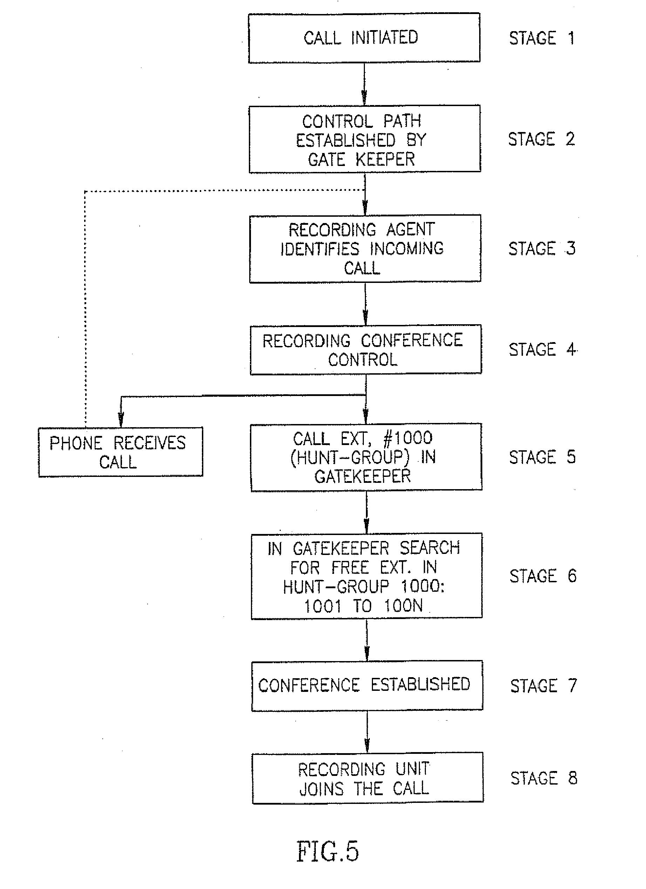

Figure 5 shows a flowchart of another exemplary method according to the present invention, with regard to the implementation of the present invention with a "hunt group". As previously described, hunt groups use a plurality of virtual telephone numbers rather than fixed telephone lines that are reserved for particular telephone numbers. The present invention supports recording and/or otherwise monitoring IP multimedia sessions with such hunt groups as shown in Figure 5.

This preferred method is similar to that of Figure 2 for stages 1-4. In stage 5, however, the gatekeeper identifies the hunt group which has been called.

In stage 6, the gatekeeper searches for a free telephone line within that particular hunt group. In stage 7, the conference call is established through the conference controller, and the recording device joins the conference call in stage 8, as previously described.

According to optional but preferred implementations of the present invention, any of the above embodiments may be optionally implemented with a "smart" telephone device in place of the computational device for operating the recording agent and/or the recording agent control module 36.

While the invention has been described with respect to a limited number of embodiments, it will be appreciated that many variations, modifications and other applications of the invention may be made.

## Claims

1. A method for recording at least a portion of an IP data session between at least a first communication device and a second communication device through a network by a recording device (24), comprising:
initiating the data session by said first communication device with said second communication device;
implementing the data session as a conference call through a conference controller (30) such that the first communication device, the second communication device and the recording device are connected as participants in the conference call; and
recording at least the portion of the IP data session using the recording device (24).

2. The method of claim 1 comprising:
directing the recording device (24) to enter the conference call as the additional participant when the data session has been initiated.

3. The method of claim 1 comprising:
permitting a user of at least one of the first and second communication devices to determine whether the session is to be recorded.

4. The method of claim 1, wherein connection of the second communication device is established by the conference controller (30) by:
passing telephone numbers to a gatekeeper (32) for performing IP address resolution; and
using a resolved IP address of the second communication device for connecting the second communication device to the conference call.

5. The method of claim 1 comprising:
entering the recording device (24) to said conference call in response to a command that the data session is to be recorded.

6. The method of claim 5 comprising, providing the command from a scheduler (48).

7. The method of claim 6 comprising, locating the scheduler with the recording device.

8. The method of claim 6 comprising, analyzing information about the IP data session at the scheduler to determine whether the IP data session is to be recorded.

9. The method of claim 8, wherein the information includes the identity of at least one of the first and second communication devices.

10. The method of claim 1, wherein the IP data session is either an IP telephony session or an IP multimedia session.

11. The method of claim 1, wherein initiating the data session is detected by a recording agent (26), and wherein the recording agent (26) contacts the recording device (24).

12. The method of claim 1, wherein the conference controller (30) is a MCU.

13. The method of claim 1, wherein the conference controller (30) implements the conference call in response to a request to initiate the conference call.

14. The method of claim 13, wherein the request is from at least one of the recording device, the first communication device, the second communication device, and another component on the network.

15. The method of claim 1, wherein the first communication device is a gateway (42) for receiving communication through a PSTN.

16. The method of claim 1, wherein the recording device (24) joins the data session performed through a hunt group.

17. The method of claim 16 comprising, identifying the hunt group using a gatekeeper (32).

18. The method of claim 1, wherein at least one of the first communication device and the second communication device is a non-IP telephony device (20).
